## Europäisches Patentamt
## European Patent Office
## Office européen des brevets

(19)

(11) Publication number: **0 248 180**
**B1**

(12)

# EUROPEAN PATENT SPECIFICATION

(45) Date of publication of the patent specification:
27.12.89

(51) Int. Cl.⁴: **F16N 31/02, F16J 15/56**

(21) Application number: **87105661.0**

(22) Date of filing: **16.04.87**

(54) Axially reciprocatable control rod.

(30) Priority: **06.06.86 IT 1518686 U**

(43) Date of publication of application:
**09.12.87 Bulletin 87/50**

(45) Publication of the grant of the patent:
**27.12.89 Bulletin 89/52**

(84) Designated Contracting States:
**DE FR GB**

(56) References cited:
**EP-A- 1 061 235**
**DE-C- 115 422**
**FR-A- 709 327**
**FR-A- 941 291**
**GB-A- 1 227 774**
**NL-C- 67 047**
**US-A- 3 593 822**

(73) Proprietor: **SASIB S.p.A., Via di Corticella, 87/89,
I-40128 Bologna(IT)**

(72) Inventor: **Vignoli, Terenzio, Via Tuscolano 59,
I-40128 Bologna(IT)**
Inventor: **Fantelli, Daniele, Via 25 Aprile 57,
I-40052 Baricella(IT)**

(74) Representative: **Porsia, Bruno et al, c/o Succ. Ing.
Fischetti & Weber Via Caffaro 3/2, I-16124 Genova(IT)**

## Description

The invention refers to an axially reciprocatable control rod slidably fitted in a supporting tube fixed to a wall of a box-like structure and protruding into the interior of this structure which contains the lubricated mechanical members for driving the rod, an oil guard sleeve extending toward the supporting tube has one end secured to the inward section of the control rod which protrudes from the supporting tube into the interior of the said box-like structure and has its opposite end fitted over the said supporting tube, so as to be longitudinally slidable therealong, the whole in such a manner, that the oil guard sleeve keeps always covered and protected against any oil splashes that section of the control rod which protrudes from the supporting tube into the interior of the box-like structure.

A rod of the above stated type is known from the document FR-A 941 291.

When using a rod of this type for controlling certain operating members of any processing machine, particularly for controlling pushing, bending, transferring means, or the like, in a packing machine and especially in a cigarette-making machine, or the like, there is generally the need of avoiding that the articles being processed be soiled by the lubricating oil used for the mechanical members. To this end, as bushes in which a control rod of the above stated type slides, self-lubrificating bushes are therefore used, whereby a direct lubrification of the rod is avoided. The control rod-driving mechanical members contained in the box-like structure and comprising, for example, cams, rollers, shafts, gearings, levers, crank mechanisms, trunnions, fulcrum pivots, and the like, however require an oil lubrification, for example, a bath lubrication, or a spray lubrication by means of small distributing pipes fed by a suitable circulating pump. It is then inevitable to have the control rod soiled by any oil splashes thrown thereupon by the moving adjacent driving members immersed in the lubricating oil, or sprayed therewith through small distributing pipes at the interior of the box-like structure. Consequently, notwithstanding there is no direct lubrication of the control rod, and in spite of the use of self-lubricating bushes in the supporting tube and an oil guard sleeve which covers the free section of the supporting rod and reciprocates over the supporting tube, any oil which accidentally deposits on the rod at the interior of the box-like structure, each time even in a small quantity, but repeatedly, spreads along the rod owing to its axially reciprocating motion, and unavoidably leaks out of the outward end of the rod-supporting tube, thus causing an undesired soiling of the articles being processed. Such an oil leakage cannot be practically avoided even with the provision of seals and scraper rings.

The control rod known from the document FR-A 941 291 is arranged vertically. From the document NL-C 67 047 a reciprocatable, horizontally arranged control rod, is however known, but this rod is provided with an oil guard sleeve which closely surrounds the control rod itself, and which is fitted at one end of an external collar. By means of this oil guard sleeve, the reciprocatable control rod is longitudinally slidable in a supporting tube which is fixed to a wall dividing an oil-free space from a space with oil. The supporting tube is provided in its lower portion with holes.

The invention aims to improve the control rod known from the document FR-A 941 291 so as to more safely avoid that any lubricating oil having leaked out of the control rod-supporting tube, may soil the articles being processed in a processing machine, of which the said control rod forms part.

To this end, the invention provides a control rod of the type as described in the preamble, and characterized by the combination of the features according to the characterizing part of Claim 1.

A further, advantageous improvement of the invention is characterized in Claim 2.

One preferred embodiment of the invention will be described hereinafter by referring to the annexed drawings, in which:

Figure 1 is a longitudinal sectional view showing a control rod according to the invention, in the position in which it is retracted into the associated box.

Figure 2 is a longitudinal sectional view showing the same control rod, in the position in which it is extended out of the box.

Figure 3 is a longitudinal sectional view taken on line III–III in figure 2.

Figure 4 is a cross-sectional view taken on line IV-IV in figure 3.

In the figures, numeral 1 denotes the wall of a box into the interior of which there protrudes a supporting tube 2 passed through the wall 1 and secured thereto ny means of a flange 102. Fitted in tube 2 are the self-lubricating bushes 3 in which the control rod 4 is axially slidably mounted. The outward end of the control rod 4, which is out of the box, carries an operating member of any processing machine, for example, a pusher 5 of a cigarette-packing machine. The inward end 104 of rod 4, which protrudes into the interior of the box, is fork-shaped, and by means of an intermediate link 6 and of pivots 7,8, it is pivotally connected to a driving lever 9 which is fulcrumed about 109 on a suitable support (not shown) at the interior of the box. The driving lever 9 is caused to swing about its fulcrum 109 in the direction of the double arrow F1, by means of a pair of cams 10,11 with which there cooperate the rollers 12,13 mounted onto the said driving lever 9. Thus, the control rod 4 is imparted an axially reciprocating motion in the direction of the double arrow F2.

The cams 10,11, the rollers 12,13, and the articulations 7,8 are sprayed in known manner with lubricating oil by means of small distributing pipes (not shown).

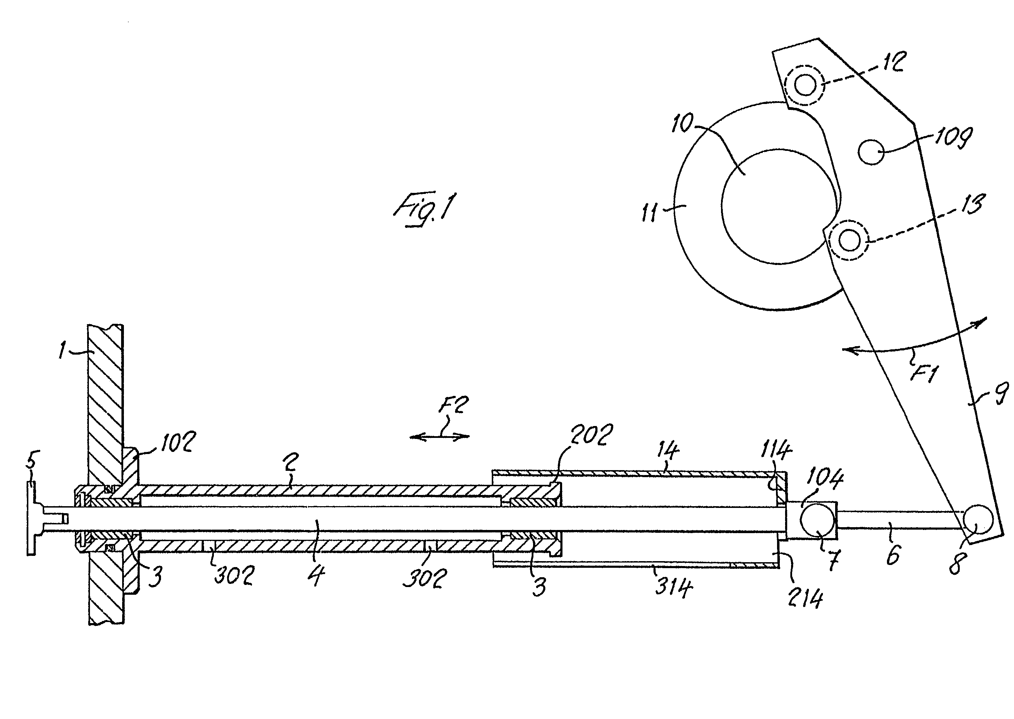

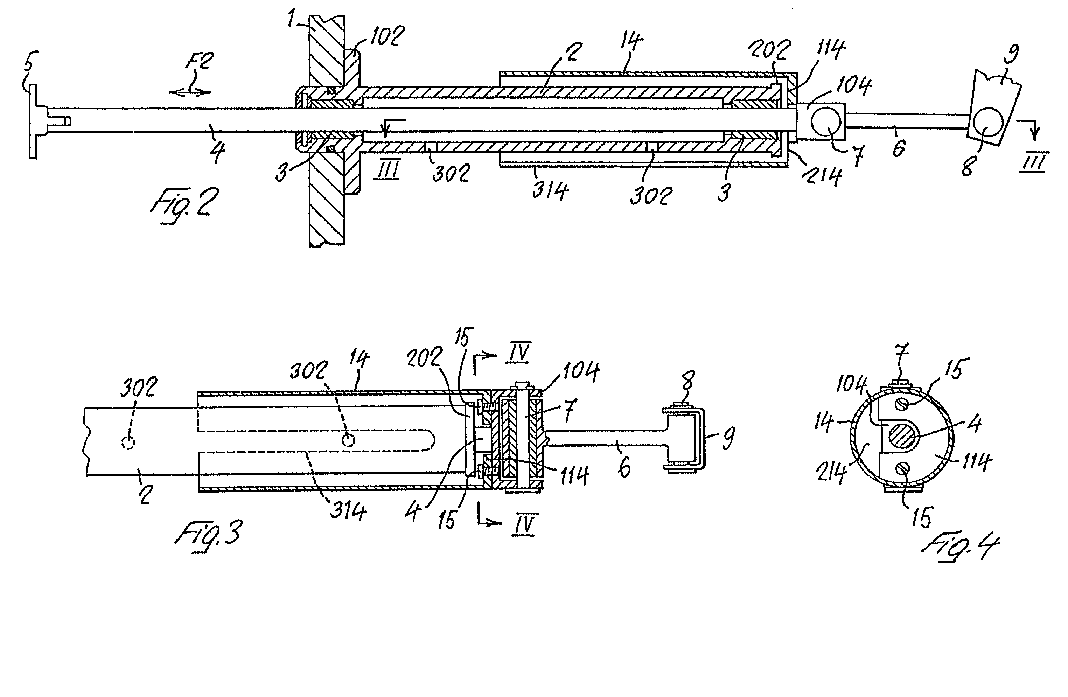

In order to prevent the control rod 4 from being soiled by any splashes of lubricating oil, a cylindrical oil guard sleeve 14 extending toward the wall 1 over the supporting tube 2, is secured to the inward end 104 of rod 4, and is freely slidable in the longitudinal direction relatively to the supporting tube 2, since its inside diameter is greater than the outside diameter of said tube 2. The oil guard sleeve 14 is of a rigid construction and is so long that it always covers that section of rod 4 which protrudes from the supporting sleeve 2 into the interior of the box, that is to say that when the rod 4 is in its fully retracted position inside the box, the oil guard sleeve 14 still has a certain section threaded over the supporting tube 2, as shown in Figure 1, while it does not abut against the wall 1 when the rod 4 is in its fully extended position outside of the box, as shown in figure 2.

The oil guard sleeve 14 is secured to the fork-shaped end 104 of rod 4 by means of the end plate 114 of this sleeve 14, and by means of screws 15. This end plate 114 of the oil guard sleeve 14 is shaped like a circle segment, so that it has an aperture 214 preferably in correspondence of its downwardly turned portion. This aperture 214 is for avoiding any air pumping phenomenon due to the quick axially reciprocating motion of the oil guard sleeve 14 simultaneously with the control rod 4, relatively to the stationary tube 2. Moreover, any oil which may drip down from the supporting tube 2 into the oil guard sleeve 14, can be drained through the aperture 114. For the same purposes (free circulation of air and oil drainage), the oil guard sleeve 14 has in its lower portion a longitudinal slot 314.

In correspondence of its inward free end, the supporting tube 2 has an external wide collar 202 that forms a sort of barrier preventing the oil from dripping down from tube 2 onto the control rod 4. In its lower portion, preferably in correspondence of the longitudinal slot 314 in the oil guard sleeve 14, the supporting tube 2 is provided with one or more holes 302 for letting out any oil which may seep into the said tube 2.

Of course, the present invention comprises also those models attaining a same utility by using the same innovative conception. More particularly, the control rod 4 may be driven by any other means different from the swinging lever 9 and the pair of cams 10,11.

## Claims

1. An axially reciprocatable control rod (4) slidably fitted in a supporting tube (2) fixed to a wall (1) of a box-like structure and protruding into the interior of this structure which contains the lubricated mechanical members (6–13) for driving the rod (4), whilst an oil guard sleeve (14) extending toward the supporting tube (2) has one end secured to the inward section of the control rod (4) which protrudes from the supporting tube (2) into the interior of the said box-like structure (1) and has its opposite end fitted over the said supporting tube (2), so as to be longitudinally slidable therealong, the whole in such a manner that the oil guard sleeve (14) keeps always covered and protected against any oil splashes that section of the control rod (4) which protrudes from the supporting tube (2) into the interior of the box-like structure (1), characterized in that
   a) the supporting tube (2), the control rod (4) and the oil guard sleeve (14) are directed horizontally,
   b) the supporting tube (2) has its lower portion provided with one or more holes (302),
   c) the supporting tube (2) has its free end provided with an external collar (202),
   d) the oil guard sleeve (14) has in its lower portion one or more holes or a longitudinal slot (314),
   e) the oil guard sleeve (14) is secured to the rod (4) by means of an end plate (114) which is provided, preferably in its lower portion, with at least one aperture (214).

2. The control rod according to Claim 1, characterized in that this rod (4) is fitted by means of one or more self-lubricating bushes (3) in the supporting tube (2).

## Patentansprüche

1. Axial hin- und herbewegbare Regelstange (4), welche gleitbar in ein Stützrohr (2) eingesetzt ist, das an der Wand (1) eines kastenartigen Aufbaues befestigt ist und in das Innere dieses Aufbaues vorspringt, welcher die geschmierten mechanischen Teile (6–13) für den Antrieb der Stange (4) enthält, während eine Ölwächterhülse (14), die sich in Richtung des Stützrohres (2) erstreckt, mit einem Ende an dem innenliegenden Abschnitt der Regelstange (4) befestigt ist, der aus dem Stützrohr (2) in das Innere des kastenartigen Aufbaues (1) hineinragt, und mit ihrem anderen Ende auf das Stützrohr (2) aufgesetzt ist, so daß sie in Längsrichtung darauf gleitbar ist, und zwar das ganze in der Weise, daß die Ölwächterhülse (14) immer den Abschnitt der Regelstange (4), welcher aus dem Stützrohr (2) hervor- und in das Innere des kastenartigen Aufbaues (1) hineinragt, gegen jegliche Ölspritzer abdeckt und schützt, dadurch gekennzeichnet, daß
   a) das Stützrohr (2), die Regelstange (4) und die Ölwächterhülse (14) horizontal gerichtet sind,
   b) das Stützrohr (2) an seinem unteren Abschnitt mit einem oder mehreren Löchern (302) versehen ist,
   c) das Stützrohr (2) an seinem freien Ende mit einem externen Kragen (202) versehen ist,
   d) die Ölwächterhülse (14) an ihrem unteren Teil ein oder mehrere Löcher oder einen länglichen Schlitz (314) hat, und
   e) die Ölwächterhülse (14) an der Stange (4) mit Hilfe einer Endplatte (114) befestigt ist, welche vorzugsweise an ihrem unteren Teil mit zumindest einer Öffnung (214) versehen ist.

2. Steuerstange nach Anspruch 1, dadurch gekennzeichnet, daß diese Stange (4) mit Hilfe einer oder mehrerer selbstschmierender Buchsen (3) auf das Stützrohr (2) aufgesetzt ist.

## Revendications

1. Une tige de commande à mouvement alternatif axial (4) qui est montée de façon coulissante dans un tube de support (2) fixé sur une paroi (1) d'une structure en forme de boîte, et faisant saillie à l'intérieur de cette structure qui contient les organes mécaniques lubrifiés (6–13) destinés à entraîner la tige (4), tandis qu'un manchon de protection contre l'huile (14) qui s'étend vers le tube de support (2) est fixé à une extrémité à la section intérieure de la tige de commande (4) qui fait saillie à l'intérieur de la structure en forme de boîte (1), à partir du tube de support (2), et est monté à son extrémité opposée sur le tube de support (2), afin de pouvoir coulisser longitudinalement le long de ce dernier, le tout d'une manière telle que le manchon de protection contre l'huile (14) recouvre et protège toujours contre des projections d'huile la section de la tige de commande (4) qui fait saillie à l'intérieur de la structure en forme de boîte (1) à partir du tube de support (2), caractérisée en ce que:

a) le tube de support (2), la tige de commande (4) et le manchon de protection contre l'huile (14) sont dirigés horizontalement,

b) un ou plusieurs trous (302) sont formés dans la partie inférieure du tube de support (2),

c) l'extrémité libre du tube de support (2) comporte un collet externe (202),

d) un ou plusieurs trous ou une fente longitudinale (314) sont formés dans la partie inférieure du manchon de protection contre l'huile (14),

e) le manchon de protection contre l'huile (14) est fixé à la tige (4) au moyen d'une plaque d'extrémité (114) qui comporte, de préférence dans sa partie inférieure, au moins une ouverture (214).

2. La tige de commande selon la revendication 1, caractérisée en ce que cette tige (4) est montée dans le tube de support (2) au moyen d'une ou de plusieurs douilles auto-lubrifiantes (3).

Fig.1

EP 0 248 180 B1

Fig. 2

Fig. 3

Fig. 4

EP 0 248 180 B1